(19) Europäisches Patentamt / European Patent Office / Office européen des brevets

(11) **EP 3 502 295 A1**

(12) **EUROPEAN PATENT APPLICATION**
published in accordance with Art. 153(4) EPC

(43) Date of publication:
**26.06.2019 Bulletin 2019/26**

(51) Int Cl.:
*C22C 38/00* (2006.01)    *B21B 1/38* (2006.01)
*C21D 8/02* (2006.01)    *C22C 38/16* (2006.01)
*C22C 38/58* (2006.01)

(21) Application number: **17841299.5**

(22) Date of filing: **04.07.2017**

(86) International application number:
**PCT/JP2017/024522**

(87) International publication number:
**WO 2018/034071 (22.02.2018 Gazette 2018/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **19.08.2016 JP 2016161412
29.05.2017 JP 2017105797**

(71) Applicant: **Kabushiki Kaisha Kobe Seiko Sho
(Kobe Steel, Ltd.)
Kobe-shi, Hyogo 651-8585 (JP)**

(72) Inventors:
• **SUGITANI, Kazuya**
  **Hyogo 651-2271 (JP)**
• **SANDAIJI, Yusuke**
  **Hyogo 651-2271 (JP)**
• **KINEFUCHI, Masao**
  **Hyogo 651-2271 (JP)**
• **YAMAGUCHI, Tetsuo**
  **Hyogo 675-0137, (JP)**
• **TONAN, Tomoyuki**
  **Hyogo 675-0137, (JP)**

(74) Representative: **Müller-Boré & Partner
Patentanwälte PartG mbB
Friedenheimer Brücke 21
80639 München (DE)**

(54) **THICK STEEL PLATE AND PRODUCTION METHOD THEREFOR**

(57) Disclosed is a thick steel plate containing: C: 0.02 to 0.10% by mass, Mn: 1.0 to 2.0% by mass, Nb: more than 0% by mass and 0.05% by mass or less, Ti: more than 0% by mass and 0.05% by mass or less, Al: 0.01 to 0.06% by mass, Si: 0.1 to 0.6% by mass, and Cu: 0.1 to 0.6% by mass, with the balance being iron and inevitable impurities, and the total of Si and Cu is 0.3% by mass or more, wherein a worked ferrite fraction is 50% or more in an area ratio, an effective grain size of grains is 30 $\mu$m or less, a martensite-austenite mixed phase is 5% or less in an area ratio, and the value of a dislocation density $\rho$ measured by X-ray diffraction is $1.0 \times 10^{14}$ m$^{-2}$ or more and $2.5 \times 10^{15}$ m$^{-2}$ or less.

*Fig.1*

EP 3 502 295 A1

**Description**

Technical Field

The present disclosure relates to a thick steel plate and a production method therefor.

Background Art

In large structures such as vessels, buildings, bridges and construction machinery, while increasing the size of structures progressed, structural members are required to have higher reliability from the viewpoint of the scale of damage when structures are damaged. It has hitherto been known that large-sized structures are often damaged by fatigue fracture, and various techniques for prevention of fatigue fracture have been developed. However, even now, there is not a few cases where fatigue fracture leads to damage.

In general, fatigue fracture has been prevented by changing the shape such that stress concentration does not easily occur or by using high-strength steel plates at the portion of large-sized structures where fatigue damage easily occurs. However, if the steel plate has excessively high strength, there is a problem that the workability degrades to increase production costs. Therefore, there is a need of the technique that not only increases the strength of the steel plate but also improves fatigue characteristics per se.

Since it has been known that the fatigue strength, especially the fatigue limit of the steel plate is usually proportional to the tensile strength, it can be said that the steel plate having a high fatigue limit ratio obtained by dividing the fatigue limit by the tensile strength is a steel plate having excellent fatigue characteristics.

Numerous studies have been made to improve fatigue characteristics so far. For example, Non-Patent Document 1 discloses the effect of various influence factors on the fatigue strength, and mentions that fatigue characteristics are improved by solid solution strengthening, precipitation strengthening, grain refinement and second phase strengthening, however, fatigue characteristics are not easily improved by dislocation strengthening since dislocation strengthening involves an increase in mobile dislocations. The process of fatigue fracture can be divided into (1) a process until cracks are generated by applying a repetitive load, and (2) a process until generated cracks develop to cause fracture. Among improvement factors of fatigue characteristics shown above, it is effective to suppress dislocation accumulation in the above process (1) and it is considered that solid solution strengthening, precipitation strengthening, grain refinement and the like are effective. Meanwhile, in the above process (2), it is effective to prevent crack development, and it is considered that grain refinement and second phase strengthening are effective.

In Non-Patent Document 2, the relationship between the fatigue strength and the strengthening mechanism is studied by strengthening a ferrite-pearlite hot-rolled steel plate by dislocation or the like.

Patent Document 1 discloses that metal structure is converted into a mixed structure of fine ferrite and bainite by adding an alloy capable of enhancing the hardenability and accelerated cooling, and thus a crack growth rate is degraded. The patent document mentions that this makes it possible to prolong fatigue lifetime after the generation of cracks to obtain a steel plate having excellent fatigue characteristics as compared with a conventional one. Patent Document 2 proposes to improve the fatigue strength by precipitation of carbide in the ferrite structure.

Prior Art Document

Non-Patent Document

Non-Patent Document 1: Abe et al., "Iron and Steel", Vol. 70 (1984), No. 10, pp1459-1466
Non-Patent Document 2: Kurita et al., "Iron and Steel", Vol. 80 (1994), No. 1, pp66-71

Patent Document

Patent Document 1 JP 2011-195944 A
Patent Document 2 JP 2009-084643 A
Patent Document 3 JP 2016-855 A

Summary of the Invention

Problems to be solved by the Invention

However, in Patent Document 1, no consideration is given to fatigue lifetime before the generation of cracks. Patent Document 2 is directed to a thin steel sheet, so that no consideration is given to satisfying other characteristics necessary for large-sized structures, such as toughness, and no mention is made of fatigue characteristics after the generation of cracks.

As disclosed in Patent Document 3, there has been found a steel material capable of prolonging both the fatigue lifetime before the generation of cracks and the fatigue lifetime after the generation of cracks. However, since fine structure is realized by precisely controlling the cooling rate using accelerated cooling as cooling after rolling, it is difficult to strictly control from the tip to the tail end of a long thick steel plate in an actual production process, so that characteristics might vary depending on the position of the steel plate, and thus there is a possibility that the productivity is degraded. Meanwhile, if accelerated cooling is not used, it is difficult to ensure fine metal structure to form a coarse ferrite/pearlite structure, and thus there is a possibility that it is difficult to ensure the static strength, and fatigue strength is also degraded at the same time.

It has been known that a production method called two-phase region rolling, as a method for ensuring the static strength without using accelerated cooling. This is a method in which dislocation is introduced into the ferrite phase by rolling at an $Ar_3$ temperature or lower at which ferrite transformation occurs during the rolling step, thus improving the static strength due to dislocation strengthening. In this method, there is no need to perform accelerated cooling after rolling, so that it is possible to reduce the variation in characteristics depending on the cooling rate, and thus the productivity is improved. However, as reported in Non-Patent Document 1 and Non-Patent Document 2, because of less contribution to an improvement in fatigue strength due to dislocation strengthening, the above-mentioned fatigue limit ratio decreases.

The embodiment of the present invention has been made in view of the foregoing circumstances, and its main object is to provide a thick steel plate having excellent strength and fatigue characteristics, and a production method therefor.

Means for Solving the Problems

The thick steel plate according to the embodiment of the present invention is a thick steel plate containing:

C: 0.02 to 0.10% by mass,
Mn: 1.0 to 2.0% by mass,
Nb: more than 0% by mass and 0.05% by mass or less,
Ti: more than 0% by mass and 0.05% by mass or less,
Al: 0.01 to 0.06% by mass,
Si: 0.1 to 0.6% by mass, and
Cu: 0.1 to 0.6% by mass, with the balance being iron and inevitable impurities, and the total of Si and Cu is 0.3% by mass or more,
in which a worked ferrite fraction is 50% or more in an area ratio,
an effective grain size of grains is 30 μm or less,
a martensite-austenite mixed phase is 5% or less in an area ratio, and
the value of a dislocation density ρ measured by X-ray diffraction is $1.0 \times 10^{14}$ m$^{-2}$ or more and $2.5 \times 10^{15}$ m$^{-2}$ or less.

In the thick steel plate according to the embodiment of the present invention, a surface residual stress in the rolling direction may be a compressive residual stress of 50 MPa or more.

The thick steel plate according to the embodiment of the present invention may contain Ni: more than 0% by mass and 0.6% by mass or less and may satisfy the following inequality (1):

$$[Ni]/[Cu] < 1.2 \qquad (1)$$

where [Ni] is the content of Ni (% by weight) and [Cu] is the content of Cu (% by weight).

The thick steel plate according to the embodiment of the present invention may contain B: more than 0% by mass and 0.005% by mass or less.

The thick steel plate according to the embodiment of the present invention may contain one or more selected from the group consisting of V: more than 0% by mass and 0.5% by mass or less, Cr: more than 0% by mass and 1.0% by mass or less, and Mo: more than 0% by mass and 0.5% by mass or less.

The method for producing a thick steel plate according to the embodiment of the present invention may contain the steps of:

producing a steel piece containing:

C: 0.02 to 0.10% by mass,
Mn: 1.0 to 2.0% by mass,
Nb: more than 0% by mass and 0.05% by mass or less,
Ti: more than 0% by mass and 0.05% by mass or less,
Al: 0.01 to 0.06% by mass,
Si: 0.1 to 0.6% by mass, and
Cu: 0.1 to 0.6% by mass, with the balance being iron and inevitable impurities, and the total of Si and Cu is 0.3% by mass or more; and

hot-rolling the steel piece under the following conditions:

a cumulative rolling reduction in a hot-rolling step: 70% or more and 98% or less,
an unrecrystallization cumulative rolling reduction: 20% or more and 90% or less,
a two-phase region rolling reduction: a rolling reduction of more than 0% and 50% or less at a temperature range of $Ar_3$ to 650°C, and
a finish rolling end temperature: 650°C or higher.

A rolling reduction per pass during the two-phase region rolling may be more than 0% and less than 30%.

The steel piece may contain Ni: more than 0% by mass and 0.6% by mass or less and may satisfy the following inequality (1):

$$[Ni]/[Cu] < 1.2 \qquad (1)$$

where [Ni] is the content of Ni (% by weight) and [Cu] is the content of Cu (% by weight).

The steel piece may contain B: more than 0% by mass and 0.005% by mass or less.

The steel piece may contain one or more selected from the group consisting of V: more than 0% by mass and 0.5% by mass or less, Cr: more than 0% by mass and 1.0% by mass or less, and Mo: more than 0% by mass and 0.5% by mass or less.

Effects of the Invention

According to the embodiment of the present invention, a thick steel plate having excellent strength and fatigue characteristics, and a production method therefor are provided.

Brief Description of the Drawings

Fig. 1 is a schematic explanatory diagram showing a steel plate according to the embodiment of the present invention.
Fig. 2 is a schematic explanatory diagram showing a test piece used for the measurement of fatigue characteristic of a cut-out fatigue test piece.
Fig. 3 is a schematic explanatory diagram showing a test piece used for the measurement of fatigue characteristic of a full-thickness fatigue test piece.

Mode for Carrying Out the Invention

The inventors of the present application have intensively studied for solving aforementioned problems and realized an improvement in strength and fatigue characteristics of a thick steel plate by appropriately controlling each content of elements that suppress conversion of dislocation into cells, such as Si and Cu, and further appropriately controlling the rolling conditions in a two-phase region.

As a result of the investigation of a ratio of pre-stage lifetime until the generation of cracks to post-stage lifetime until fracture after the generation of cracks with respect to the total lifetime until fatigue fracture, it has been found the pre-stage lifetime until the generation of cracks accounts for about 50% of the total lifetime until fatigue fracture, and the proportion of the pre-stage stage lifetime until the generation of crack increases as the total lifetime is prolonged by lowering the stress level. For this reason, in order to prolong the total lifetime until fatigue fracture, there is a need to improve not only fatigue characteristics after the generation of cracks but also fatigue characteristics until the generation of cracks. Especially, in the vicinity of the fatigue limit, since the proportion of the pre-stage lifetime until the generation of cracks tends to increase, it is considered to be effective to prolong the pre-stage lifetime.

Therefore, as a result of the study of the requirements for prolonging the pre-stage lifetime from various viewpoints, it has been found that a thick steel plate in which the chemical composition of the thick steel plate was appropriately controlled, and a worked ferrite fraction, an effective grain size of grains, an area ratio of a martensite-austenite mixed phase and the value of a dislocation density $\rho$ measured by X-ray diffraction were appropriately controlled can prolong the pre-stage lifetime even if the thick steel plate has a coarse structure as compared with a conventional one, and thus making it possible to prolong the total lifetime until fatigue fracture.

The inventors of the present application have studied the rolling conditions in order to further improve fatigue characteristics by preventing degradation of fatigue characteristics due to excessive introduction of mobile dislocation and controlling a compressive residual stress in the rolling direction of a surface of a steel plate layer to a predetermined value or more (i.e., controlling a surface residual stress in the rolling direction to a predetermined value or more of a compressive residual stress). As a result, it has been found that it is possible to allow ferrite in the vicinity of the surface of the steel plate to undergo plastic deformation by controlling the rolling reduction per pass to the predetermined value or less to perform the two-phase region rolling, and thus it is possible to impart residual stress that is effective to improve fatigue characteristics while mobile dislocation is prevented from being excessively introduced into the steel plate. Hereinafter, the surface residual stress in the rolling direction is sometimes referred to as "compressive residual stress" or "residual stress".

A thick steel plate according to the embodiment of the present invention, and a production method therefor are described in detail below.

<1. Thick Steel Plate>

As a result of the investigation of the relationship between additive elements and fatigue strength with respect to various thick steel plates, it has become clear that the addition of Si and Cu significantly improves the fatigue strength. Generally, fatigue cracks occur due to the fact that the motion of mobile dislocation moving due to repeated stress turns to irreversible motion due to cross slip or the like. Although it is known that dislocation forms a cell structure at this time, it became clear that the formation of the cell structure is suppressed by adding Si and Cu in the total amount of 0.3% by mass or more.

As a result of detailed observation of the steel plate, these elements form no precipitate and are not remarkably solid-soluted in the carbide existing in the steel plate, so that it is considered that these elements exist in a state of being solid-soluted in the matrix. In other words, it is considered that, if these elements sufficiently exist in a solid-soluted state in the matrix, the irreversible motion of dislocation is suppressed, and thus the fatigue lifetime is improved before the generation of cracks. It has been found that other additive elements such as Mn and Cr do not significantly exert this effect of suppressing conversion of dislocation into cells.

As a result of the production of various thick steel plates while changing the rolling conditions and the investigation of the relationship between mechanical properties and fatigue limit ratio for the various thick steel plates, it has been found that a decrease in fatigue limit ratio can be suppressed by appropriately controlling the cumulative rolling reduction in a hot-rolling step, the unrecrystallization cumulative rolling reduction, the two-phase region rolling reduction and the temperature in the two-phase region rolling (rolling at an $Ar_3$ transformation point or lower), and the finish rolling end temperature. This is because dislocation introduced into ferrite is fixed by carbon in the steel material and turns to immobile dislocation by performing the two-phase region rolling at high temperature in some degree, and thus it is possible to suppress an influence of decreasing the fatigue limit ratio. It is possible to allow ferrite in the vicinity of the surface of the steel plate to undergo plastic deformation by controlling a rolling reduction per pass to a predetermined value or less to perform the two-phase region rolling, and thus it is possible to impart residual stress that is effective to improve fatigue characteristics while mobile dislocation is prevented from being excessively introduced into the steel plate. In other words, by controlling the rolling reduction per pass during two-phase region pressure reduction, the compressive residual stress can be effectively imparted, and thus fatigue characteristics can be improved.

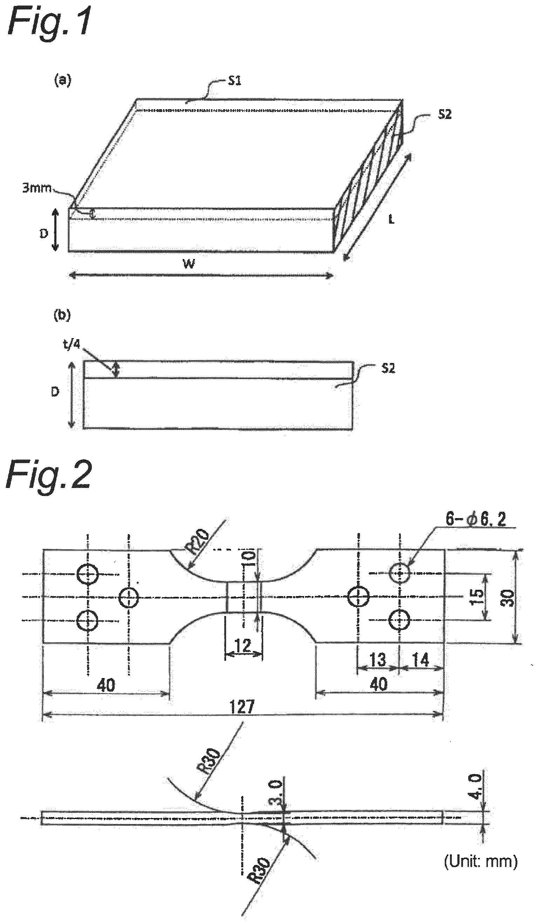

Fig. 1 is a schematic explanatory diagram showing a steel plate according to the embodiment of the present invention. Fig. 1(a) is a schematic perspective view of the steel plate according to the embodiment of the present invention, and Fig. 1(b) is a schematic side view of the steel plate according to the embodiment of the present invention. In Fig. 1, L denotes the rolling direction, W denotes the width direction, D denotes the thickness direction, S1 denotes a surface of the steel plate, and S2 denotes a cross-section in the thickness direction D parallel to the rolling direction L.

As a result of the investigation of fatigue characteristics of various steel plates with different chemical compositions and structure morphology, for example, it has been found that a thick steel plate having excellent fatigue characteristics can be obtained by controlling the metal structure in a longitudinal cross-section (i.e., cross-section S2 of Fig. 1) parallel to the rolling direction at the position that is t/4 away from the surface of the steel plate, when t is the thickness.

The thick steel plate according to the embodiment of the present invention is a thick steel plate containing:

C: 0.02 to 0.10% by mass,
Mn: 1.0 to 2.0% by mass,
Nb: more than 0% by mass and 0.05% by mass or less,
Ti: more than 0% by mass and 0.05% by mass or less,
Al: 0.01 to 0.06% by mass,
Si: 0.1 to 0.6% by mass, and
Cu: 0.1 to 0.6% by mass, with the balance being iron and inevitable impurities, and the total of Si and Cu is 0.3% by mass or more,
wherein a worked ferrite fraction is 50% or more in an area ratio,
an effective grain size of grains is 30 $\mu$m or less,
a martensite-austenite mixed phase is 5% or less in an area ratio, and
the value of a dislocation density $\rho$ measured by X-ray diffraction is $1.0 \times 10^{14}$ m$^{-2}$ or more and $2.5 \times 10^{15}$ m$^{-2}$ or less.

The ferrite structure having appropriate grain size is ensured by appropriately adding alloy elements such as C, Mn and Nb, and at the same time, conversion of dislocation into cells that cause the generation of fatigue cracks is suppressed by appropriately adjusting each additive amount of Si and Cu, and thus a thick steel plate having excellent fatigue characteristics can be realized.

Each constitution is described in detail below.

(C: 0.02 to 0.10% by mass)

C is an element that is important in ensuring the strength of the base material (steel plate). Therefore, the C content was set at 0.02% by mass or more. The C content is preferably 0.03% by mass or more, and more preferably 0.04% by mass or more. Meanwhile, excessive C content not only excessively increases the strength, and thus failing to obtain desired tensile strength, but also causes degradation of other characteristics required to the thick steel plate, such as weldability. Therefore, the C content was set at 0.10% by mass or less. The C content is preferably 0.08% by mass or less, and more preferably 0.07% by mass or less.

(Mn: 1.0 to 2.0% by mass)

Mn is an element that is important in ensuring the hardenability in order to obtain a fine structure. To effectively exert such effect, there is a need to set the Mn content at 1.0% by mass or more. The Mn content is preferably 1.2% by mass or more, and more preferably 1.4% by mass or more. However, excessive Mn content easily forms MA, and thus failing to obtain sufficient fatigue characteristics. Therefore, there is a need to set the Mn content at 2.0% by mass or less. The Mn content is preferably 1.8% by mass or less, and more preferably 1.7% by mass or less.

(Nb: more than 0% by mass and 0.05% by mass or less)

Nb is an element that is effective to improve the hardenability and to refine the structure. To effectively exert such effect, the Nb content was set at more than 0% by mass. The Nb content is preferably set at 0.01% by mass or more, and more preferably 0.02% by mass or more. However, excessive Nb content easily forms MA, and thus failing to obtain desired fatigue characteristics. Therefore, there is a need to set the Nb content at 0.05% by mass or less. The Nb content is preferably 0.04% by mass or less, and more preferably 0.03% by mass or less.

(Ti: more than 0% by mass and 0.05% by mass or less)

Ti is an element that is not only useful for improving the hardenability, but also refining the structure of the heat affected zone during welding by formation of TiN, thereby suppressing degradation of the toughness. Therefore, the Ti content was set at more than 0% by mass. Ti is preferably contained in the amount of 0.01% by mass or more, and more preferably 0.02% by mass or more. However, excessive Ti content might form coarse TiN, and thus degrading characteristics such as toughness. Therefore, there is a need to set the Ti content at 0.05% by mass or less. The Ti content is preferably 0.04% by mass or less, and more preferably 0.03% by mass or less.

(Al: 0.01 to 0.06% by mass)

Al is an element that is useful for deoxidation, and the Al content was set at 0.01% by mass or more. If the Al content is less than 0.01% by mass, the deoxidation effect is not exerted. The Al content is preferably 0.02% by mass or more, and more preferably 0.03% by mass or more. However, excessive Al content causes excessive enhancement in hardenability and an increase in dislocation density p, and thus failing to obtain desired fatigue characteristics. Therefore, there is a need to set the Al content at 0.06% by mass or less. The Al content is preferably 0.05% by mass or less, and more preferably 0.04% by mass or less.

(Si: 0.1 to 0.6% by mass)

Si is an element that is required to ensure the strength of the base material because of large amount of solid solution strengthening, and is also an element that is effective to suppress conversion of dislocation into cells by suppressing the motion of dislocation. To effectively exert such effect, there is a need to set the Si content at 0.1% by mass or more. The Si content is preferably 0.2% by mass or more, and more preferably 0.3% by mass or more. However, excessive Si content might easily form MA, leading to degradation of other characteristics such as toughness. Therefore, there is a need to set the Si content at 0.6% by mass or less. The silicon content is preferably 0.55% by mass or less, and more preferably 0.5% by mass or less.

(Cu: 0.1 to 0.6% by mass)

Cu is an element that is effective to suppress conversion of dislocation into cells by suppressing cross slip of dislocation. To effectively exert such effect, there is a need to set the Cu content at 0.1% by mass or more. The Cu content is preferably 0.2% by mass or more, and more preferably 0.3% by mass or more. However, excessive Cu content causes excessive enhancement in hardenability and easily generates cracks and the like during hot working. Therefore, there is a need to set the Cu content at 0.6% by mass or less. The Cu content is preferably 0.55% by mass or less, and more preferably 0.5% by mass or less.

(Total of Si and Cu: 0.3% by mass or more)

Si and Cu exert common effect in terms of suppression of conversion of dislocation into cells and each may be added alone. To obtain desired fatigue limit ratio, there is a need to use both in combination. It is possible to effectively exert the effect of suppressing conversion of dislocation into cells by Si and Cu when the total of Si and Cu is 0.3% by mass or more. The total is preferably 0.4% by mass or more. From the viewpoint of suppression of an increase in MA, the upper limit of the total of Si and Cu is the total of each upper limit of Si and Cu, i.e., 1.2% by mass, and preferably 1.0% by mass.
The basic components in the thick steel plate according to the embodiment of the present invention are as mentioned above, and the balance is substantially iron. As a matter of course, inevitable impurities, for example, P, S or N and the like incorporated according to the conditions of raw materials, materials, manufacturing facilities and the like are permitted to be contained in the steel.
The thick steel plate according to the embodiment of the present invention may selectively contain the following elements and characteristics of the thick steel plate are further improved according to types of elements to be contained.

(Ni: more than 0% by mass and 0.6% by mass or less)

Ni has the effect of improving the hardenability and refining the structure, and also has the effect of suppressing cracks during hot working, which tend to generate by the addition of Cu. To exert such effect, the Ni content is preferably set at more than 0% by mass, more preferably 0.1% by mass or more, and further preferably 0.2% by mass or more. However, excessive Ni content causes excessive enhancement in hardenability and excessive increase in dislocation density p, and thus failing to obtain desired fatigue characteristics. Therefore, the Ni content is preferably set at 0.6% by mass or less, more preferably 0.5% by mass or less, and further preferably 0.4% by mass or less.
If the Ni content [Ni] excessively increases relative to the Cu content [Cu], it becomes difficult to obtain the effect of suppressing conversion of dislocation into cells by Cu, so that the ratio of the Ni content [Ni] to the Cu content [Cu], ([Ni]/[Cu]), is preferably set at less than 1.2, and more preferably 1.1 or less. The lower limit of the ratio ([Ni]/[Cu]) is approximately 0.5 or more, and more preferably 0.6 or more.

(B: more than 0% by mass and 0.005% by mass or less)

B is an element for improving the hardenability, especially an element that suppresses the formation of a coarse ferrite structure, and thus making it easy to form a fine upper bainite structure. To exert such effect, the B content is preferably set at 0.0005% by mass or more, and more preferably 0.001% by mass or more. However, excessive B content causes excessive enhancement in hardenability and excessive increase in dislocation density p, and thus failing to obtain desired fatigue characteristics. Therefore, the B content is preferably set at 0.005% by mass or less, and more preferably 0.004% by mass or less.

(One or more selected from Group consisting of V: more than 0% by mass, 0.5% by mass or less, Cr: more than 0% by mass and 1.0% by mass or less, and Mo: more than 0% by mass and 0.5% by mass or less)

V, Cr and Mo are elements having the effect of improving the hardenability of the steel plate and are effective to refine the structure. To exert such effect, it is preferable to contain V: 0.01% by mass or more, Cr: 0.1% by mass or more, and Mo: 0.01% by mass or more alone, or two or more thereof. However, excessive contents of these element cause excessive enhancement in hardenability, and thus failing to obtain desired tensile strength. Therefore, it is preferable to set each amount at the followings: V: 0.5% by mass or less, Cr: 1.0% by mass or less, and Mo: 0.5% by mass or less, and more preferably V: 0.4% by mass or less, Cr: 0.8% by mass or less, and Mo: 0.4% by mass or less.

The metal structure of the thick steel plate according to the embodiment of the present invention satisfies that:

a worked ferrite fraction is 50% or more in an area ratio,
an effective grain size of grains is 30 $\mu$m or less,
a martensite-austenite mixed phase is 5% or less in an area ratio, and
the value of a dislocation density $\rho$ measured by X-ray diffraction is $1.0 \times 10^{14}$ m$^{-2}$ or more and $2.5 \times 10^{15}$ m$^{-2}$ or less.

The respective characteristics are described below.

(Worked Ferrite Fraction)

In the production of the thick steel plate according to the embodiment of the present invention, dislocation is added to ferrite in a two-phase temperature region by two-phase region rolling at relatively high temperature, and dislocation is fixed by carbon. To obtain such effect, there is a need for worked ferrite into which dislocation is introduced by two-phase region rolling to exist in a predetermined amount or more.

The worked ferrite fraction is quantified by a parameter GOS value (grain orientation spread) measured by EBSD. Here, the GOS value is a parameter that indicates the average of orientation difference between one measurement point and the other measurement point in grains within the same grain. It is considered that when dislocation is introduced into grains by two-phase rolling, orientation difference of grains is caused by dislocation, and thus the GOS value increases.

As used herein, the worked ferrite means grains having the GOS value of more than 4°, and the worked ferrite fraction means an area ratio of the worked ferrite in the metal structure.

There is a need to set the worked ferrite fraction at 50% or more, and preferably 55% or more. The method for measuring the worked ferrite fraction is described in detail in Examples.

(Effective Grain Size of Grains)

Since the development of fatigue cracks is strongly influenced by grain orientation, when grains with different orientations are developed after the generation of fatigue cracks, there is a need to develop by changing the direction of development, grain boundary becomes an obstacle to the development of cracks. For this reason, it is considered that the fatigue lifetime is prolonged as the grain size decreases. To obtain such effect, when the region surrounded by large angle grain boundary having an orientation difference of grains of 15° or more is defined as the grain, a circle equivalent diameter (hereinafter sometimes referred to as "effective grain size") was set at 30.0 $\mu$m or less. The effective grain size is preferably 28.0 $\mu$m or less, and more preferably 25 $\mu$m or less.

(Area Ratio of Martensite-Austenite Mixed Phase)

The martensite-austenite mixed phase (MA) formed in the cooling process or the like after rolling causes expansion transformation in the formation process thereof, thereby introducing mobile dislocation into parent phase, and thus causing a decrease in lifetime until the generation of cracks. Therefore, in the metal structure of the thick steel plate, an area ratio of MA in the metal structure (hereinafter sometimes referred to as MA fraction) is set at 5% or less. The smaller the area ratio of MA, the better. The area ratio of MA is preferably 3% or less, more preferably 1% or less, and most preferably 0%.

(Dislocation Density ρ)

By setting the value of the dislocation density ρ determined by X-ray diffraction (XRD) at $1.0 \times 10^{14}$ m$^{-2}$ or more, the static strength can be improved without decreasing the fatigue limit ratio. The value of the dislocation density is preferably $2.0 \times 10^{14}$ m$^{-2}$ or more. However, excessive two-phase region rolling causes a decrease in fatigue limit ratio because of insufficient dislocation fixing. Therefore, the upper limit of the dislocation density is $2.5 \times 10^{15}$ m$^{-2}$ or less, preferably $2.0 \times 10^{15}$ m$^{-1}$ or less, and more preferably $1.5 \times 10^{15}$ m$^{-1}$ or less.

(Surface Residual Stress in Rolling Direction)

In the thick steel plate according to the embodiment of the present invention, a surface residual stress in the rolling direction is preferably a compressive residual stress of 50 MPa or more. The surface residual stress in the rolling direction is a compressive residual stress of 50 MPa or more, whereby, fatigue characteristics can be further improved. The compressive residual stress is more preferably 100 MPa or more. There is no particular limitation on the upper limit of the compressive residual stress, and the compressive residual stress applied under normal rolling is 250 MPa or less.

The compressive residual stress can be determined by the $\sin^2 \psi$ method according to "Standard method for X-ray stress measurement -Steel-; JSMS-SD-5-02 (2002)" edited by JSMS Committe on X-ray Study on Mechanical Behavior of Materials, The Society of Materials Science, Japan. An example of the measuring method is described below.

After collecting test piece having the same thickness as that of the steel plate from the steel plate, using an X-ray stress measuring device, X-rays are irradiated on a rolled surface (i.e., surface of the steel plate) of each test piece at a plurality of incident angles $\psi$ in the direction parallel to the rolling direction, and then a peak position 29 (diffraction angle of the (211) plane) of a diffraction line at each incident angle $\psi$ is measured. When residual stress exists, the peak position ($2\theta$) of the diffraction line varies when the incident angle $\psi$ of X-rays is changed.

After plotting 29 as the ordinate and $\sin^2 \psi$ as the abscissa, a regression line is determined by the least square method to obtain its inclination, and thus the stress value $\sigma$ can be determined from the following equation (2):

$$\sigma = -\frac{E}{2(1+\nu)} \cdot \cot\theta_0 \cdot \frac{\pi}{180} \cdot M = K \cdot M \qquad (2)$$

where E and $\nu$ each denote Young's modulus and Poisson's ratio of the steel material, $2\theta_0$ denotes a strain-free diffraction angle, M denotes an inclination of a regression line $\sin^2 \psi$, and K denotes a stress constant.

The case where the stress value $\sigma$ is negative is judged that the compressive residual stress exists, and the absolute value thereof is regarded as the compressive residual stress.

There is no particular limitation on thickness of the thick steel plate according to the embodiment of the present invention. Small thickness leads to less contribution to an improvement in crack development lifetime. From such point of view, the thickness is preferably 6 mm or more, and more preferably 10 mm or more. Meanwhile, an increase in thickness leads to insufficient introduction of dislocation by two-phase region rolling, so that the thickness is preferably 60 mm or less, and more preferably 50 mm or less.

The thick steel plate according to the embodiment of the present invention with such constitution may be preferably used as structural materials of vessels, buildings, bridges, construction machinery and the like.

<2. Method for Producing Thick Steel Plate>

In order to obtain desired effect, the thick steel plate according to the embodiment of the present invention is produced by the following method using a steel piece with the above chemical composition, for example, slab.

In a series of production processes of a thick steel plate in which the steel is melted, cast and then subjected to hot-rolling, the cumulative rolling reduction in a hot-rolling step, the unrecrystallization cumulative rolling reduction, the two-phase region rolling reduction (rolling reduction after starting ferrite transformation) and the finish rolling end temperature are controlled under the following conditions:

cumulative rolling reduction in a hot-rolling step: 70% or more and 98% or less,
unrecrystallization cumulative rolling reduction: 20% or more and 90% or less,
two-phase region rolling reduction: a rolling reduction is more than 0% and 50% or less at a temperature range of

Ar$_3$ to 650°C, and
finish rolling end temperature: 650°C or higher.

The heating temperature before hot-rolling, the cumulative rolling reduction in a hot-rolling step and/or the rolling reduction in an unrecrystallization temperature range are preferably controlled in the following manner.

Before hot-rolling, the steel piece is preferably heated to a temperature range of 1,000 to 1,200°C, and more preferably 1,050°C or higher. However, if the heating temperature excessively increases and exceeds 1,200°C, it is impossible to decrease the structure size even if sufficient rolling is performed. Therefore, the heating temperature is preferably set at 1,200°C or lower, and more preferably 1,150°C or lower.

From the viewpoint of grain size reduction, the cumulative rolling reduction in the hot-rolling step is set at 70% or more, and preferably 75% or more. The upper limit of the cumulative rolling reduction is not particularly defined and is 98% or less taking account of production load in actual production process.

To decrease the size of the structure, especially effective grain size, there is a need to perform sufficient rolling reduction in the unrecrystallization temperature regange. Therefore, the rolling reduction in the unrecrystallization temperature range is set at 20% or more, preferably 25% or more, and more preferably 30% or more. The upper limit of the unrecrystallization rolling reduction is not particularly defined and is 90% or less taking account of production load in actual production process.

The "cumulative rolling reduction" is the value calculated by the following equation:

$$\text{Cumulative rolling reduction} = (t_0 - t_1)/t_2 \times 100$$

where $t_0$ denotes a rolling start thickness (unit: mm) of a steel piece when the temperature of the surface of the steel piece is in a rolling temperature range, $t_1$ denotes a rolling end thickness (unit: mm) of a steel piece when the temperature of the surface of the steel piece is in a rolling temperature range, and $t_2$ denotes a thickness of the steel piece before rolling, for example, the thickness of the slab, respectively.

The Ar$_3$ transformation point adopted the value obtained by the following equation:

$$\text{Ar}_3 \text{ transformation point} = 910 - 230 \times [\text{C}] + 25 \times [\text{Si}]$$
$$- 74 \times [\text{Mn}] - 56 \times [\text{Cu}] - 16 \times [\text{Ni}] - 9 \times [\text{Cr}] - 5 \times [\text{Mo}] -$$
$$1620 \times [\text{Nb}] \qquad\qquad (3)$$

where [C], [Si], [Mn], [Cu], [Ni], [Cr], [Mo] and [Nb] each denote each content of C, Si, Mn, Cu, Ni, Cr, Mo and Nb in % by mass.

From the viewpoint of more effectively adding dislocation to ferrite in the two-phase temperature region to fix dislocation by carbon, the lower limit of the two-phase region rolling reduction is preferably 3%, and more preferably 5%. The upper limit is preferably 40%, and more preferably 25%. The lower limit of the temperature during two-phase region rolling is preferably 670°C, and more preferably 680°C.

From the viewpoint of effectively imparting the compressive residual stress, the rolling reduction per pass during two-phase region rolling is preferably more than 0%, more preferably 3% or more, and further preferably 5% or more, and preferably less than 30%, more preferably 20% or less, further preferably 18% or less, and most preferably 15% or less.

To obtain desired fine structure, cooling is preferably performed at a cooling rate of 0.1°C/sec or more, and more preferably 0.3°C/sec. However, if the cooling rate is excessively increased, MA increases, and thus fatigue characteristics are degraded. Therefore, the cooling rate is set at 20°C/sec or less, and preferably 10°C/sec or less.

While the method for producing a thick steel plate according to the embodiment of the present invention has been described above, there is a possibility that those skilled, which understand desired characteristics of a thick steel plate according to the embodiment of the present invention, find a method for producing a thick steel plate having desired characteristics according to the embodiment of the present invention as a result of trial and error, which is other than the above-mentioned production method.

Examples

The embodiments of the present invention are more specifically described below by way of Examples, but the present invention is not limited by the following Examples. Various modifications can be made as long as they are adaptable to the above-mentioned and below-mentioned concepts and are included within the technical scope of the present invention.

Each of the steels with the chemical composition of steel types A to S shown in Table 1 was melted and cast according to an ordinary melting method and then hot-rolled under various rolling conditions Nos. a to n shown in Table 2 to obtain the steel plates each having a thickness of 10 to 50 mm. In Table 1, "-" indicates that no element is added, and [Si] + [Cu] indicates the total content of Si and Cu. The $Ar_3$ transformation point shown in Table 1 is the value obtained by the above-mentioned equation. In Table 2, "cumulative rolling reduction in a hot-rolling step" is the cumulative reduction in the entire hot-rolling step.

[Table 1]

| Steel type | Chemical composition [% by mass] Balance being iron and inevitable impurities | | | | | | | | | | | | [Si]+[Cu] | [Si]/[Cu] | Ar₃ transformation point |
|---|---|---|---|---|---|---|---|---|---|---|---|---|---|---|---|
| | C | Si | Mn | Al | Cu | Ni | Cr | Mo | V | Nb | Ti | B | | | |
| A | 0.05 | 0.31 | 1.56 | 0.03 | 0.31 | 0.30 | - | - | - | 0.019 | 0.015 | 0.0012 | 0.62 | 0.97 | 738 |
| B | 0.06 | 0.25 | 1.59 | 0.03 | 0.33 | 0.16 | - | - | - | 0.020 | 0.015 | 0.0009 | 0.58 | 0.48 | 731 |
| C | 0.05 | 0.38 | 1.81 | 0.04 | 0.24 | 0.20 | - | - | - | 0.018 | 0.021 | 0.0009 | 0.62 | 0.83 | 728 |
| D | 0.04 | 0.41 | 1.61 | 0.03 | 0.32 | 0.00 | - | - | - | 0.020 | 0.016 | 0.0009 | 0.73 | 0.00 | 742 |
| E | 0.07 | 0.44 | 1.55 | 0.03 | 0.33 | 0.29 | - | - | - | 0.025 | 0.016 | - | 0.77 | 0.88 | 727 |
| F | 0.04 | 0.42 | 1.55 | 0.03 | 0.32 | 0.32 | 0.2 | - | - | 0.019 | 0.018 | 0.0015 | 0.74 | 1.00 | 741 |
| G | 0.04 | 0.41 | 1.57 | 0.03 | 0.32 | 0.31 | - | 0.02 | - | 0.023 | 0.019 | 0.0009 | 0.73 | 0.97 | 735 |
| H | 0.05 | 0.39 | 1.52 | 0.03 | 0.35 | 0.30 | - | - | 0.02 | 0.023 | 0.017 | 0.0008 | 0.74 | 0.86 | 734 |
| I | 0.01 | 0.22 | 1.21 | 0.03 | 0.14 | 0.11 | - | - | - | 0.015 | 0.016 | - | 0.72 | 0.79 | 790 |
| J | 0.21 | 0.42 | 1.86 | 0.03 | 0.32 | 0.18 | - | - | - | 0.020 | 0.016 | 0.0018 | 0.74 | 0.56 | 681 |
| K | 0.05 | 0.10 | 1.61 | 0.03 | 0.10 | - | - | - | - | 0.021 | 0.018 | 0.0013 | 0.20 | - | 742 |
| L | 0.08 | 1.00 | 1.88 | 0.03 | 0.31 | 0.23 | - | - | - | 0.020 | 0.017 | 0.0014 | 1.31 | 0.74 | 724 |
| M | 0.03 | 0.34 | 2.12 | 0.03 | 0.29 | 0.18 | - | - | - | 0.022 | 0.017 | 0.0013 | 0.63 | 0.62 | 700 |
| N | 0.03 | 0.26 | 0.55 | 0.03 | 0.18 | 0.12 | - | - | - | 0.011 | 0.019 | 0.0005 | 0.44 | 0.67 | 839 |
| O | 0.05 | 0.52 | 1.57 | 0.03 | 1.50 | - | - | - | - | 0.018 | 0.016 | 0.0012 | 2.02 | 0.00 | 682 |
| P | 0.03 | 0.21 | 1.51 | 0.03 | 0.25 | 1.20 | - | - | - | 0.019 | 0.019 | 0.0010 | 0.46 | 4.80 | 733 |
| Q | 0.06 | 0.41 | 1.56 | 0.03 | 0.30 | 0.15 | 1.5 | - | - | 0.020 | 0.020 | 0.0008 | 0.71 | 0.50 | 726 |
| R | 0.04 | 0.42 | 1.52 | 0.03 | 0.29 | 0.28 | - | 1.00 | - | 0.021 | 0.018 | 0.0009 | 0.71 | 0.97 | 744 |
| S | 0.03 | 0.41 | 1.55 | 0.03 | 0.31 | 0.22 | - | - | 1.00 | 0.025 | 0.018 | 0.0009 | 0.72 | 0.71 | 737 |

[Table 2]

| Rolling condition No. | Heating temperature of steel piece before hot-rolling [°C] | Cumulative rolling reduction in hot-rolling step [%] | Unrecrystallization cumulative rolling reduction [%] | Rolling reduction per pass of two-phase region rolling step [%] | Two-phase region rolling reduction [%] | Finish rolling end temperature [°C] | Finish thickness [mm] | Cooling rate [°C/s] |
|---|---|---|---|---|---|---|---|---|
| a | 1,150 | 80 | 40 | 3 | 10 | 680 | 50 | 1 |
| b | 1,150 | 95 | 40 | 3 | 15 | 680 | 10 | 2 |
| c | 1,150 | 90 | 65 | 3 | 10 | 680 | 20 | 3 |
| d | 1,175 | 80 | 40 | 8 | 30 | 680 | 50 | 1 |
| e | 1,150 | 80 | 40 | 5 | 15 | 660 | 50 | 1 |
| f | 1,150 | 80 | 40 | 2 | 15 | 700 | 50 | 1 |
| g | 1,150 | 80 | 40 | 15 | 30 | 680 | 50 | 1 |
| h | 1,150 | 50 | 40 | 3 | 15 | 680 | 50 | 1 |
| i | 1,150 | 80 | 0 | 3 | 15 | 680 | 50 | 1 |
| j | 1,150 | 80 | 40 | 3 | 70 | 680 | 50 | 1 |
| k | 1,150 | 80 | 35 | 3 | 25 | 550 | 50 | 1 |
| l | 1,150 | 75 | 40 | 0 | 0 | 680 | 50 | 1 |
| m | 1,150 | 80 | 40 | 3 | 15 | 680 | 50 | 25 |
| n | 1,150 | 90 | 40 | 45 | 45 | 680 | 50 | 1 |

With respect to each steel plate, the structure, the worked ferrite fraction, the MA fraction, the effective grain size, the dislocation density ρ, the compressive residual stress, the tensile strength, and the fatigue characteristics of the steel plate were measured by the following procedures.

In the measurement of the structure, the MA fraction, the worked ferrite fraction, the effective grain size, and the dislocation density ρ of the steel plate, each test piece was collected so that the position at a depth $t/4$ from the surface of the steel plate was the evaluation position.

The compressive residual stress was measured using specimens having the same thickness as that of the steel plate.

The tensile strength and fatigue characteristics were measured using each test piece collected so that the position at a depth $t/4$ from the surface of the steel plate was the evaluation position. To confirm the effect of improving fatigue characteristics due to compressive residual stress, the test was also performed with respect to the collected specimens having the same thickness as that of the steel plate. Hereinafter, test pieces for the measurement of tensile strength and fatigue characteristics, that were collected so that the position at a depth $t/4$ from the surface of the steel plate was the evaluation position, are sometimes referred to as "cut-out tensile test piece" and "cut-out fatigue test piece", respectively. Hereinafter, test pieces having the same thickness as that of the steel plate collected for the measurement of tensile strength and fatigue characteristics are sometimes referred to as "full thickness tensile test piece" and "full-thickness fatigue test piece", respectively.

(Structure of Steel Plate)

Each of samples was cut out so that the surface, that is parallel to the rolling direction of the steel sheet at a depth $t/4$ from the surface of the steel plate and is also perpendicular to the surface of the steel plate, was exposed, followed by polishing using wet emery polishing papers, #150 to #1000, and further mirror polishing using the diamond abrasive as an abrasive. The mirror-polished test piece was etched with a 2% nitric acid-ethanol solution, i.e., nital solution, and then observed in three fields of view at a magnification of 400 times (observation area: $3.71 \times 10^{-2}$ mm$^2$). Metal structure was sorted by image analysis processing using image analysis software "Image Pro Plus ver. 4.0" manufactured by Media Cybernetics, Inc.. The values of the three fields of view were averaged to obtain an area ratio of each metal structure. The observation area was photographed with a field of view, in which the position at a depth $t/4$ from the surface of the steel plate was a center, 166 μm in the thickness direction and 222.74 μm in the rolling direction.

(Effective Grain Size)

In a longitudinal cross-section parallel to the rolling direction at the position that is $t/4$ away from the surface of the steel plate, the effective grain size was measured by SEM (scanning electron microscope) - EBSP (electron backscatter pattern). Specifically, using an EBSP apparatus (trade name: "OIM") manufactured by TEX SEM Laboratories, Inc. in combination with SEM, the grain size was measured as a region surrounded by a large angle grain boundary having an orientation difference of adjacent grains of 15° or more is the grain. Measurement conditions were as follows: measurement area: 200 μm × 200 μm and measurement step: 0.5 μm intervals, and measurement points having a confidence index showing the reliability of the measurement orientation of less than 0.1 were excluded from analysis objects. With respect to the thus obtained grain boundary, the cutting length at 100 points was measured in the thickness direction, and the average thereof was regarded as the effective grain size. However, when the effective grain size is 2.0 μm or less, it was judged as measurement noise and excluded. The observation area was a region with a spread of 100 μm on both sides in the thickness direction, in which the position at a depth $t/4$ away from the surface of the steel plate was set as the center.

(Worked Ferrite Fraction)

The measurement by EBSD was performed by the same procedure as in the above-mentioned method for measuring an effective grain size, and the area fraction of grains having a GOS value of more than 4° was measured and the area fraction thus obtained was regarded as the worked ferrite fraction.

(Area Ratio of Martensite-Austenite Mixed Phase [MA Fraction])

The above mirror-finished steel plate test piece was etched with a LePera etchant prepared by mixing a solution A (solution of 3 g of picric acid + 100 ml of ethanol), a solution B (solution of 1 g of sodium metabisulfite + 100 ml of distilled water) and ethanol at a ratio of (solution A:solution B:ethanol) of 5:6:1. After observation (observation area: $3.71 \times 10^{-2}$ mm$^2$) at an observation magnification of 400 times, image analysis processing of the white etched phase as MA was performed using the above image analysis software, followed by sorting of the metal structure. Then, the values of the five fields of view were averaged to obtain an area ratio of MA.

(Dislocation Density $\rho$)

The dislocation density $\rho$ was calculated from the half-width of $\alpha$-Fe obtained by X-ray diffraction measurement. The measurement conditions and measurement principle are described below. An X-ray diffraction apparatus "RAD-RU300" (trade name: manufactured by Rigaku Denki Kogyo Co., Ltd.) was used as an analyzer and a Co dry-bulb was used as a target. From the thus obtained X-ray diffraction measurement results, a peak half-width was calculated by peak fitting and the dislocation density $\rho$ was calculated. The dislocation density $\rho$ was obtained from the following equation (4):

$$\rho \ (\mathrm{m}^{-1}) = -14.4\varepsilon^2/\mathrm{b}^2 \qquad (4)$$

where $\varepsilon$ denotes strain and b denotes Burgers vector (= $0.25 \times 10^{-9}$ m), respectively.
The strain $\varepsilon$ is the value calculated based on the following equations (5) and (6) by applying the Hall Method:

$$\beta\cos\theta/\lambda = 0.9/\mathrm{D} + 2\varepsilon\sin\theta/\lambda \qquad (5)$$

$$\beta^2 = \beta_\mathrm{m}^2 - \beta_\mathrm{s}^2 \qquad (6)$$

where $\beta$ is a true half-width (unit: rad), $\theta$ is a Bragg angle (unit: °), $\lambda$ is an incident X-ray wavelength (unit: nm), D is a grain size (unit: nm), $\beta_\mathrm{m}$ is a measured half-width, and $\beta_\mathrm{s}$ is a half-width (apparatus constant) in a strain-free sample. $\beta$ was calculated from $\beta_\mathrm{m}$ and $\beta_\mathrm{s}$ according to the above equation and this value is substituted in the above equation to plot $\beta\cos\theta/\lambda$-$\sin\theta/\lambda$, followed by fitting of three points of (110), (211) and (220) using the least square method. Then, the strain $\varepsilon$ was calculated from the inclination ($2\varepsilon$) of the linear fit and substituted in the above equation to calculate the dislocation density $\rho$.

(Compressive Residual Stress)

The compressive residual stress was determined by the $\sin^2 \psi$ method according to "Standard method for X-ray stress measurement -Steel-; JSMS-SD-5-02 (2002)" edited by JSMS Committe on X-ray Study on Mechanical Behavior of Materials, The Society of Materials Science, Japan. Detailed description is made below.
After collecting test pieces having the same thickness as that of the steel plate from the steel plate, using a PSPC microfocused X-ray stress measurement apparatus "MSF-3M" manufactured by Rigaku Corporation, X-rays were irradiated on one of the rolled surface (i.e., the surface of the steel plate) of each test piece at a plurality of incident angles $\psi$ (0.00°, 21.00°, 30.00°, 38.00°, 45.00°) in the direction parallel to the rolling direction, and then a peak position $2\theta$ (diffraction angle of the (211) plane) of a diffraction line at each incident angle $\psi$ was measured. In the measurement, Cr-K$\alpha$ was used as a radiation source.
After plotting $2\theta$ as the ordinate and $\sin^2 \psi$ as the abscissa, the regression line was determined by the least square method to obtain its inclination, and thus the stress value $\sigma$ was determined from the following equation (2):

$$\sigma = -\frac{\mathrm{E}}{2(1+\nu)} \cdot \cot\theta_0 \cdot \frac{\pi}{180} \cdot \mathrm{M} = \mathrm{K} \cdot \mathrm{M} \qquad (2)$$

where E and $\nu$ each denote Young's modulus (210 GPa) and Poisson's ratio (0.3) of the steel material, $2\theta_0$ denotes a strain-free diffraction angle (156.4°), and M denotes an inclination of the regression line $2\theta$-$\sin^2\psi$. K denotes a stress constant, which is the value of the ferritic steel material (-318 MPa/deg) mentioned in "Standard method for X-ray stress measurement -Steel-; JSMS-SD-5-02 (2002)" edited by JSMS Committe on X-ray Study on Mechanical Behavior of Materials, The Society of Materials Science, Japan.
The case where the stress value $\sigma$ is negative was judged that the compressive residual stress exists, and the absolute value thereof was regarded as the compressive residual stress.
With respect to the other surface of the rolled surface of the test piece, the compressive residual stress was measured in the same manner as mentioned above and the average of both surfaces was determined, and thus the average was regarded as the compressive residual stress of the steel plate.

(Tensile Strength of Cut-Out Tensile Test Piece)

Tensile test pieces having a thickness of 4 mm and a gauge length of 35 mm were collected from the position at a depth of 2 to 6 mm from the surface of each steel plate, and then the tensile strength $TS_a$ was measured by performing a tensile test according to JIS Z2241:2011. It was judged that a steel plate having $TS_a$ of 440 MPa or more and 620 MPa or less is in a practical level.

(Tensile Strength of Full-Thickness Tensile Test Piece)

According to Nippon Kaiji Kyokai "Steel Ship Regulation, Part K Material, Chapter 2 (2013)", tensile test pieces were collected from each steel plate so that the longitudinal direction was the rolling direction , and then the tensile strength $TS_b$ was measured. It was judged that a steel plate having $TS_b$ of 440 MPa or more and 620 MPa or less is in a practical level.

(Fatigue Characteristic of Cut-Out Fatigue Test Piece)

After a steel plate having a thickness of 4 mm was cut out from the position at a depth of 2 to 6 mm from the surface of each steel plate, cut-out fatigue test pieces shown in Fig. 2 were fabricated and fatigue characteristic of the cut-out fatigue test pieces was determined by performing a fatigue test under the following conditions. The surface of each test piece was polished using emery polishing papers to #1200, to remove an influence of the surface condition. The obtained test piece was subjected to the fatigue test under the following conditions using the electrohydraulic servo-type fatigue testing machine manufactured by Instron Corp.

Test environment: room temperature in the atmosphere
Control method: load control
Control waveform: sine wave
Stress ratio: R = -1
Test speed: 20 Hz
Test end cycle number: 5,000,000 times

Fatigue characteristic of the cut-out fatigue test piece are influenced by the tensile strength $TS_a$, and a five million-times fatigue limit ratio was determined to remove the influence. The test piece whose five million-times fatigue limit ratio exceeds 0.51 was rated "Pass". The five million-times fatigue limit ratio was the value obtained by dividing the five million-times fatigue limit by the tensile strength $TS_a$, and the five million-times fatigue limit ratio was determined as follows. In each test piece, the fatigue test was performed at a stress amplitude at which the value ($\sigma a/TS_a$) obtained by dividing the stress amplitude oa by the tensile strength $TS_a$ was 0.51, and it was examined whether or not fracture occurs when reached five million times.

(Fatigue Characteristic of Full-Thickness Fatigue Test Piece)

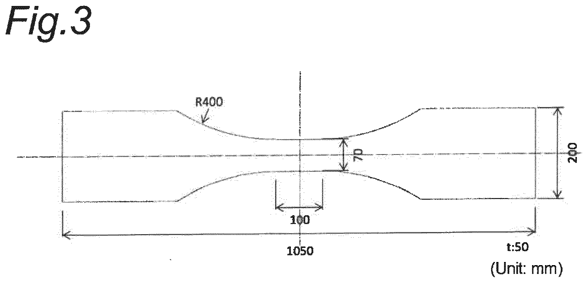

Test pieces shown in Fig. 3 were fabricated and fatigue characteristic of the full-thickness fatigue test pieces was determined by performing a fatigue test under the following conditions.

Test environment: room temperature in the atmosphere
Control method: load control
Control waveform: sine wave
Stress ratio: 0.05
Test speed: 1 to 10 Hz
Test end cycle number: 2,000,000 times

Fatigue characteristic of the full-thickness fatigue test piece is influenced by the tensile strength $TS_b$, and a one million-times fatigue limit ratio was determined to remove the influence. The test piece whose one million-times fatigue limit ratio exceeds 0.70 was judged that fatigue characteristic was further improved by the compressive residual stress. The one million-times fatigue limit ratio was the value obtained by dividing the one million-times fatigue limit by the tensile strength $TS_b$, and the one million-times fatigue limit ratio was determined as follows. In each test piece, the fatigue test was performed at a stress amplitude at which the value ($\Delta\sigma/TS_b$) obtained by dividing the stress range $\Delta\sigma$ by the tensile strength $TS_b$ was 0.70, and it was examined whether or not fracture occurs when reached one million times.

The structure, the effective grain size, the worked ferrite fraction, the MA fraction, the dislocation density p, the compressive residual stress, the tensile strength $TS_a$ of the cut-out tensile test piece, the tensile strength $TS_b$ of the full-thickness tensile test piece, the fatigue characteristic of the cut-out fatigue test piece, and the fatigue characteristic of the full-thickness fatigue test piece of the steel plate are shown in Table 3.

[Table 3]

| Test No. | Steel type | Rolling condition No. | Tensile strength of cut-out tensile test piece $TS_a$ [MPa] | Tensile strength of full-thickness tensile test piece $TS_b$ [MPa] | Structure of steel plate* | Effective grain size [μm] | Worked ferrite fraction | MA fraction [Area %] | $\rho$ [$\times 10^{15}$ m$^{-2}$] | Compressive residual stress [MPa] | Fatigue characteristic of cut-out fatigue test piece | Fatigue characteristic of full-thickness fatigue test piece |
|---|---|---|---|---|---|---|---|---|---|---|---|---|
| 1 | A | a | 554 | 554 | F+P | 18.1 | 61 | 0.3 | 0.5 | 100 | No fracture | No fracture |
| 2 | B | a | 548 | 559 | F+P | 17.8 | 61 | 0.2 | 0.5 | 100 | No fracture | No fracture |
| 3 | C | a | 583 | 553 | F+P | 16.9 | 60 | 0.3 | 0.4 | 100 | No fracture | No fracture |
| 4 | D | a | 551 | 588 | F+P | 18.2 | 62 | 0.4 | 0.6 | 150 | No fracture | No fracture |
| 5 | E | a | 564 | 556 | F+P | 20.3 | 58 | 0.5 | 0.8 | 100 | No fracture | No fracture |
| 6 | F | a | 563 | 569 | F+P | 17.6 | 62 | 0.4 | 0.6 | 100 | No fracture | No fracture |
| 7 | G | a | 559 | 554 | F+P | 17.7 | 60 | 0.3 | 0.6 | 100 | No fracture | No fracture |
| 8 | H | a | 539 | 534 | F+P | 16.8 | 61 | 0.3 | 0.5 | 100 | No fracture | No fracture |
| 9 | A | b | 571 | 566 | F+P | 17 | 72 | 0.2 | 0.5 | 100 | No fracture | No fracture |
| 10 | A | c | 568 | 563 | F+P | 15.2 | 61 | 0.1 | 0.5 | 100 | No fracture | No fracture |
| 11 | A | d | 561 | 561 | F+P | 16.9 | 91 | 0.3 | 0.9 | 100 | No fracture | No fracture |
| 12 | A | e | 557 | 557 | F+P | 21.2 | 70 | 0.1 | 0.6 | 100 | No fracture | No fracture |
| 13 | A | f | 581 | 583 | F+P | 16.5 | 71 | 0.3 | 0.3 | 100 | No fracture | No fracture |
| 14 | A | g | 550 | 550 | F+P | 16.9 | 90 | 0.3 | 0.9 | 120 | No fracture | No fracture |
| 15 | I | a | 426 | 426 | F+P | - | - | - | | - | - | - |
| 16 | J | a | 651 | 652 | F+P | - | - | - | - | - | - | - |
| 17 | K | a | 527 | 528 | F+P | 19.2 | 59 | 0.6 | 0.4 | 100 | Occurrence of fracture | Occurrence of fracture |
| 18 | L | a | 596 | 597 | F+P | 20.6 | 57 | 5.5 | 0.6 | 100 | Occurrence of fracture | Occurrence of fracture |
| 19 | M | a | 583 | 580 | F+P | 12.8 | 61 | 0.6 | 0.5 | 100 | Occurrence of fracture | Occurrence of fracture |

(continued)

| Test No. | Steel type | Rolling condition No. | Tensile strength of cut-out tensile test piece TS$_a$ [MPa] | Tensile strength of full-thickness tensile test piece TS$_b$ [MPa] | Structure of steel plate* | Effective grain size [μm] | Worked ferrite fraction | MA fraction [Area %] | ρ [×10$^{15}$ m$^{-2}$] | Compressive residual stress [MPa] | Fatigue characteristic of cut-out fatigue test piece | Fatigue characteristic of full-thickness fatigue test piece |
|---|---|---|---|---|---|---|---|---|---|---|---|---|
| 20 | N | a | 561 | 558 | F+P | 22.4 | 59 | 0.1 | 0.5 | 100 | Occurrence of fracture | Occurrence of fracture |
| 21 | O | a | 631 | 628 | F+P | - | 63 | - | - | - | - | - |
| 22 | P | a | 615 | 612 | F+P | 16 | 52 | 2.1. | 3.4 | 100 | Occurrence of fracture | Occurrence of fracture |
| 23 | Q | a | 674 | 671 | F+P | - | - | - | - | - | - | - |
| 24 | R | a | 638 | 639 | F+P | - | - | - | - | - | - | - |
| 25 | S | a | 699 | 700 | F+P | - | - | - | - | - | - | - |
| 26 | A | h | 487 | 488 | F+P | 35 | 71 | 0.3 | 0.5 | 100 | Occurrence of fracture | Occurrence of fracture |
| 27 | A | i | 497 | 495 | F+P | 36.8 | 70 | 0.2 | 0.8 | 100 | Occurrence of fracture | Occurrence of fracture |
| 28 | A | j | 617 | 615 | F+P | 29.1 | 98 | 0.5 | 3.2 | 150 | Occurrence of fracture | Occurrence of fracture |
| 29 | A | k | 566 | 567 | F+P | 16.6 | 91 | 0.1 | 3.1 | 100 | Occurrence of fracture | Occurrence of fracture |
| 30 | A | l | 445 | 446 | F+P | 20.1 | 30 | 0.5 | 0.3 | 30 | Occurrence of fracture | Occurrence of fracture |
| 31 | A | m | 455 | 456 | F+B | 10.8 | 70 | 2.1 | 0.6 | 100 | Occurrence of fracture | Occurrence of fracture |
| 32 | A | n | 450 | 451 | F+P | 18.3 | 70 | 0.5 | 0.6 | 40 | No fracture | Occurrence of fracture |

* F: Ferrite, P: pearlite, B: bainite, Retained structure: martensite and austenite

From these results, it can be considered as follows. Tests Nos. 1 to 14 and 32 exhibited excellent fatigue characteristics, since the chemical composition of the steel and the production conditions are appropriately controlled, the constitutions of the metal structure defined in the embodiment of the present invention are satisfied.

Test No. 32 is an example produced under the condition No. n of large rolling reduction per pass during two-phase region rolling. In spite of small compressive residual stress and insufficient fatigue characteristic of the full-thickness fatigue test piece, sufficient fatigue characteristic of the cut-out test piece was obtained.

Meanwhile, tests Nos. 15 to 31 are examples in which any one of the requirements defined in the embodiment of the present invention deviates, and all examples exhibited inferior fatigue characteristics.

Test No. 15 is an example in which a steel plate of steel type I with low C content was used, and predetermined tensile strengths $TS_a$ and $TS_b$ could not be achieved. Therefore, characteristics other than structure were not evaluated.

Test No. 16 is an example in which a steel plate of steel type J with excessive C content was used, and tensile strengths $TS_a$ and $TS_b$ excessively increased. Therefore, characteristics other than structure were not evaluated.

Test No. 17 is an example in which a steel plate of steel type K that deviates from the requirement "the total content of Si and Cu is 0.3% by mass or more" was used, and conversion of dislocation into cells was not effectively suppressed, and thus fatigue characteristics of cut-out and full-thickness fatigue test pieces were degraded.

Test No. 18 is an example in which a steel plate of steel type L with excessive Si content was used, and the MA fraction increased, and thus fatigue characteristics of cut-out and full-thickness fatigue test pieces were degraded.

Test No. 19 is an example in which a steel plate of steel type M with excessive Mn content was used, and conversion of dislocation into cells was not effectively suppressed, and thus fatigue characteristics of cut-out and full-thickness fatigue test pieces were degraded.

Test No. 20 is an example in which a steel plate of steel type N with low Mn content, and conversion of dislocation into cells was not effectively suppressed, and thus fatigue characteristics of cut-out and full-thickness fatigue test pieces were degraded.

Test No. 21 is an example in which a steel plate of steel type O with excessive Cu content was used, and excessive hardenability was exhibited, and thus predetermined tensile strengths $TS_a$ and $TS_b$ were not achieved. Therefore, characteristics other than the structure and the worked ferrite fraction were not evaluated.

Test No. 22 is an example in which a steel plate of steel type P with excessive Ni content was used and the requirement of [Ni]/[Cu] < 1.2 deviates, and conversion of dislocation into cells was not effectively suppressed, and thus fatigue characteristics of cut-out and full-thickness fatigue test pieces were degraded.

Test No. 23 is an example in which a steel plate of steel type Q with excessive Cr content was used, and excessive hardenability was exhibited, and thus predetermined tensile strengths $TS_a$ and $TS_b$ were not achieved. Therefore, characteristics other than the structure were not evaluated.

Test No. 24 is an example in which a steel plate of steel type R with excessive Mo content was used, and excessive hardenability was exhibited, and thus predetermined tensile strengths $TS_a$ and $TS_b$ were not achieved. Therefore, characteristics other than the structurewere not evaluated.

Test No. 25 is an example in which a steel plate of steel type S with excessive V content was used, and excessive hardenability was exhibited, and thus predetermined tensile strengths $TS_a$ and $TS_b$ were not achieved. Therefore, characteristics other than the structure were not evaluated.

Test No. 26 is an example obtained under the rolling condition No. h of low cumulative reduction during hot-rolling, and effective grain size excessively increased, and thus fatigue characteristics of cut-out and full-thickness fatigue test pieces were degraded.

Test No. 27 is an example obtained under the rolling condition No. i of low unrecrystallization cumulative rolling reduction, and effective grain size excessively increased, and thus degrading fatigue characteristics of cut-out and full-thickness fatigue test pieces were degraded.

Test No. 28 is an example obtained under the rolling condition No. j of high two-phase region rolling reduction, and the dislocation density $\rho$ excessively increased, and thus degrading fatigue characteristics of cut-out and full-thickness fatigue test pieces were degraded.

Test No. 29 is an example obtained under the rolling condition No. k of low finish rolling end temperature, and introduction of excessive dislocation into the structure by rolling could not be suppressed, and thus fatigue characteristics of cut-out and full-thickness fatigue test pieces.

Test No. 30 is an example obtained under the rolling condition No. 1 of not performing two-phase region rolling, and small worked ferrite fraction was exhibited, and thus fatigue characteristics of cut-out and full-thickness fatigue test pieces were degraded. Small compressive residual stress was also exhibited.

Test No. 31 is an example obtained under the condition No. m of high cooling rate, and the MA fraction increased, and thus fatigue characteristics of cut-out and full-thickness fatigue test pieces were degraded.

The contents of the disclosure of the present invention include the following aspects.

Aspect 1:

A thick steel plate containing:

C: 0.02 to 0.10% by mass,
Mn: 1.0 to 2.0% by mass,
Nb: more than 0% by mass and 0.05% by mass or less,
Ti: more than 0% by mass and 0.05% by mass or less,
Al: 0.01 to 0.06% by mass,
Si: 0.1 to 0.6% by mass, and
Cu: 0.1 to 0.6% by mass, with the balance being iron and inevitable impurities, and the total of Si and Cu is 0.3% by mass or more,
wherein a worked ferrite fraction is 50% or more in an area ratio,
an effective grain size of grains is 30 $\mu$m or less,
a martensite-austenite mixed phase is 5% or less in an area ratio, and
the value of a dislocation density $\rho$ measured by X-ray diffraction is $1.0 \times 10^{14}$ m$^{-2}$ or more and $2.5 \times 10^{15}$ m$^{-2}$ or less.

Aspect 2:
The thick steel plate according to aspect 1, wherein a surface residual stress in the rolling direction is a compressive residual stress of 50 MPa or more.

Aspect 3:
The thick steel plate according to aspect 1 or 2, which contains Ni: more than 0% by mass and 0.6% by mass or less and satisfies the following inequality (1):

$$[Ni]/[Cu] < 1.2 \qquad (1)$$

where [Ni] is the content of Ni (% by weight) and [Cu] is the content of Cu (% by weight).

Aspect 4:
The thick steel plate according to any one of aspects 1 to 3, which contains B: more than 0% by mass and 0.005% by mass or less.

Aspect 5:
The thick steel plate according to any one of aspects 1 to 4, which contains one or more selected from the group consisting of V: more than 0% by mass and 0.5% by mass or less, Cr: more than 0% by mass and 1.0% by mass or less, and Mo: more than 0% by mass and 0.5% by mass or less.

Aspect 6:
A method for producing a thick steel plate, which includes the steps of:

producing a steel piece containing:
C: 0.02 to 0.10% by mass,
Mn: 1.0 to 2.0% by mass,
Nb: more than 0% by mass and 0.05% by mass or less,
Ti: more than 0% by mass and 0.05% by mass or less,
Al: 0.01 to 0.06% by mass,
Si: 0.1 to 0.6% by mass and,
Cu: 0.1 to 0.6% by mass, with the balance being iron and inevitable impurities, and the total of Si and Cu is 0.3% by mass or more; and
hot-rolling the steel piece under the following conditions:

a cumulative rolling reduction in a hot-rolling step: 70% or more and 98% or less,
an unrecrystallization cumulative rolling reduction: 20% or more and 90% or less,
a two-phase region rolling reduction: a rolling reduction of more than 0% and 50% or less at a temperature range of Ar$_3$ to 650°C, and
a finish rolling end temperature: 650°C or higher.

Aspect 7:
The method for producing a thick steel plate according to aspect 6, wherein a rolling reduction per pass during the two-phase region rolling is more than 0% and less than 30%.

Aspect 8:
The method for producing a thick steel plate according to aspect 6 or 7, wherein the steel piece contains Ni: more than 0% by mass and 0.6% by mass or less and satisfies the following inequality (1):

$$[Ni]/[Cu] < 1.2 \qquad (1)$$

where [Ni] is the content of Ni (% by weight) and [Cu] is the content of Cu (% by weight).

Aspect 9:
The method for producing a thick steel plate according to any one of aspects 6 to 8, wherein the steel piece contains B: more than 0% by mass and 0.005% by mass or less.

Aspect 10:
The method for producing a thick steel plate according to any one of aspects 6 to 9, wherein the steel piece contains one or more selected from the group consisting of V: more than 0% by mass and 0.5% by mass or less, Cr: more than 0% by mass and 1.0% by mass or less, and Mo: more than 0% by mass and 0.5% by mass or less.

The present application claims priority to Japanese Patent Application No. 2016-161412 filed on August 19, 2016 and Japanese Patent Application No. 2017-105797 filed on May 29, 2017. Japanese Patent Application No. 2016-161412 and Japanese Patent Application No. 2017-105797 are incorporated herein by reference.

**Claims**

1. A thick steel plate comprising:

   C: 0.02 to 0.10% by mass,
   Mn: 1.0 to 2.0% by mass,
   Nb: more than 0% by mass and 0.05% by mass or less,
   Ti: more than 0% by mass and 0.05% by mass or less,
   Al: 0.01 to 0.06% by mass,
   Si: 0.1 to 0.6% by mass, and
   Cu: 0.1 to 0.6% by mass, with the balance being iron and inevitable impurities, and the total of Si and Cu is 0.3% by mass or more,
   wherein a worked ferrite fraction is 50% or more in an area ratio,
   an effective grain size of grains is 30 $\mu$m or less,
   a martensite-austenite mixed phase is 5% or less in an area ratio, and
   the value of a dislocation density $\rho$ measured by X-ray diffraction is $1.0 \times 10^{14}$ m$^{-2}$ or more and $2.5 \times 10^{15}$ m$^{-2}$ or less.

2. The thick steel plate according to claim 1, wherein a surface residual stress in the rolling direction is a compressive residual stress of 50 MPa or more.

3. The thick steel plate according to claim 1, which comprises Ni: more than 0% by mass and 0.6% by mass or less and satisfies the following inequality (1):

$$[Ni]/[Cu] < 1.2 \qquad (1)$$

where [Ni] is the content of Ni (% by weight) and [Cu] is the content of Cu (% by weight).

4. The thick steel plate according to claim 2, which comprises Ni: more than 0% by mass and 0.6% by mass or less and satisfies the following inequality (1):

$$[Ni]/[Cu] < 1.2 \qquad (1)$$

where [Ni] is the content of Ni (% by weight) and [Cu] is the content of Cu (% by weight).

5. The thick steel plate according to according to any one of claims 1 to 4, which comprises any one or more of the following (a) and (b):

(a) B: more than 0% by mass and 0.005% by mass or less, and
(b) one or more selected from the group consisting of V: more than 0% by mass and 0.5% by mass or less, Cr: more than 0% by mass and 1.0% by mass or less, and Mo: more than 0% by mass and 0.5% by mass or less.

6. A method for producing a thick steel plate, which comprises the steps of:

producing a steel piece comprising:

C: 0.02 to 0.10% by mass,
Mn: 1.0 to 2.0% by mass,
Nb: more than 0% by mass and 0.05% by mass or less,
Ti: more than 0% by mass and 0.05% by mass or less,
Al: 0.01 to 0.06% by mass,
Si: 0.1 to 0.6% by mass, and
Cu: 0.1 to 0.6% by mass, with the balance being iron and inevitable impurities, and the total of Si and Cu is 0.3% by mass or more; and

hot-rolling the steel piece under the following conditions:

a cumulative rolling reduction in a hot-rolling step: 70% or more and 98% or less,
an unrecrystallization cumulative rolling reduction: 20% or more and 90% or less,
a two-phase region rolling reduction: a rolling reduction of more than 0% and 50% or less at a temperature range of $Ar_3$ to 650°C, and
a finish rolling end temperature: 650°C or higher.

7. The method for producing a thick steel plate according to claim 6, wherein a rolling reduction per pass during the two-phase region rolling is more than 0% and less than 30%.

8. The method for producing a thick steel plate according to claim 6, wherein the steel piece comprises Ni: more than 0% by mass and 0.6% by mass or less and satisfies the following inequality (1):

$$[Ni]/[Cu] < 1.2 \qquad (1)$$

where [Ni] is the content of Ni (% by weight) and [Cu] is the content of Cu (% by weight).

9. The method for producing a thick steel plate according to claim 7, wherein the steel piece comprises Ni: more than 0% by mass and 0.6% by mass or less and satisfies the following inequality (1):

$$[Ni]/[Cu] < 1.2 \qquad (1)$$

where [Ni] is the content of Ni (% by weight) and [Cu] is the content of Cu (% by weight).

10. The method for producing a thick steel plate according to any one of claims 6 to 9, which comprises any one or more of the following (a) and (b):

(a) B: more than 0% by mass and 0.005% by mass or less, and
(b) one or more selected from the group consisting of V: more than 0% by mass and 0.5% by mass or less, Cr: more than 0% by mass and 1.0% by mass or less, and Mo: more than 0% by mass and 0.5% by mass or less.

# Fig.1

(a)

(b)

# Fig.2

(Unit: mm)

*Fig.3*

R400

70

200

100

1050

t:50

(Unit: mm)

# EP 3 502 295 A1

## INTERNATIONAL SEARCH REPORT

| | International application No. |
|---|---|
| | PCT/JP2017/024522 |

### A. CLASSIFICATION OF SUBJECT MATTER

*C22C38/00*(2006.01)i, *B21B1/38*(2006.01)i, *C21D8/02*(2006.01)i, *C22C38/16*(2006.01)i, *C22C38/58*(2006.01)i

According to International Patent Classification (IPC) or to both national classification and IPC

### B. FIELDS SEARCHED

Minimum documentation searched (classification system followed by classification symbols)
C22C38/00-38/60, B21B1/38, C21D8/02

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2015/178320 A1 (Kobe Steel, Ltd.), 26 November 2015 (26.11.2015), & EP 3147379 A1 & KR 10-2016-0144439 A & CN 106460114 A | 1-10 |
| A | JP 2003-239036 A (Nippon Steel Corp.), 27 August 2003 (27.08.2003), (Family: none) | 1-10 |
| A | JP 11-001742 A (Nippon Steel Corp.), 06 January 1999 (06.01.1999), (Family: none) | 1-10 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 September 2017 (04.09.17) | 12 September 2017 (12.09.17) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011195944 A
- JP 2009084643 A
- JP 2016000855 A
- JP 2016161412 A
- JP 2017105797 A

**Non-patent literature cited in the description**

- **ABE et al.** *Iron and Steel,* 1984, vol. 70 (10), 1459-1466
- **KURITA et al.** *Iron and Steel,* 1994, vol. 80 (1), 66-71
- Standard method for X-ray stress measurement -Steel-; JSMS-SD-5-02 (2002). JSMS Committe on X-ray Study on Mechanical Behavior of Materials. The Society of Materials Science, 2002
- **NIPPON KAIJI KYOKAI.** Steel Ship Regulation. 2013